# EUROPEAN PATENT APPLICATION

(11) **EP 3 067 682 A1**
(43) Date of publication of application: **14.09.2016**
(21) Application number: 16159892.5
(22) Date of filing: 11.03.2016
(51) Int. Cl.: G01M 15/12, G01M 15/10

(54) **JOINT TIME-FREQUENCY AND WAVELET ANALYSIS OF KNOCK SENSOR SIGNAL**

(30) Priority: 13.03.2015 US 201514657817
(71) Applicant: General Electric Company, Schenectady, NY 12345 (US)
(72) Inventor: BIZUB, Jeffrey Jacob, Waukesha, WI 53188 (US)
(74) Representative: Williams, Andrew Richard

(57) **Abstract**

A method 150 includes receiving 152 a noise signal sensed by a knock sensor 23 disposed in or proximate to a combustion chamber 12 of a combustion engine 10, preconditioning the noise signal to generate a preconditioned noise signal, and process the preconditioned noise signal to determine a location, a time, or a combination thereof, of a peak firing pressure in the combustion chamber of the combustion engine.

## Description

### BACKGROUND

The subject matter disclosed herein relates to reciprocating engines and, more specifically, to systems and methods for processing a signal from a knock sensor of a reciprocating engine (e.g., an internal combustion engine) via joint time-frequency analysis and/or wavelet analysis.

Combustion engines typically combust a carbonaceous fuel, such as natural gas, gasoline, diesel, and the like, and use the corresponding expansion of high temperature and pressure gases to apply a force to certain components of the engine, e.g., a piston disposed in a cylinder of the engine, to move the components over a distance. Accordingly, the carbonaceous fuel is transformed into mechanical motion, useful in driving a load. For example, the load may be a generator that produces electric power.

In certain configurations, timing of various operations or conditions (e.g., peak firing pressure) of the combustion engine may be monitored and estimated using traditional techniques. However, traditional monitoring techniques may not be as accurate, and corrective measures of the combustion engine utilizing the traditional monitoring techniques may reduce an efficiency of the engine. Accordingly, improved monitoring of peak firing pressure (and/or other operational operating events) may be useful.

### BRIEF DESCRIPTION

Certain examples commensurate in scope with the originally claimed invention are summarized below. These embodiments are not intended to limit the scope of the claimed invention, but rather these examples are intended only to provide a brief summary of possible forms of the present disclosure. Indeed, the present disclosure may encompass a variety of forms that may be similar to or different from the examples set forth below.

In a first aspect, a method includes receiving a noise signal sensed by a knock sensor disposed in or proximate to a combustion chamber of a combustion engine, preconditioning the noise signal to generate a preconditioned noise signal, and processing the preconditioned noise signal to determine a location, a time, or a combination thereof, of a peak firing pressure in the combustion chamber of the combustion engine.

In a second aspect, a system includes an engine control system configured to monitor peak firing pressure of a combustion chamber of a combustion engine. The engine control system includes a processor configured to receive a noise signal sensed by a knock sensor disposed in or proximate to a combustion chamber of the combustion engine, precondition the noise signal to generate a preconditioned noise signal, and process the preconditioned noise signal to determine a location, a time, or a combination thereof of the peak firing pressure.

In a third aspect, a non-transitory computer readable medium includes executable instructions that, when executed, cause a processor to receive a noise signal sensed by a knock sensor disposed in or proximate to a combustion engine, precondition the noise signal to generate a preconditioned noise signal, apply a transform function to the preconditioned noise signal to generate a transformed signal, and analyze the transformed signal to determine a location, a time, or a combination thereof of a peak firing pressure in a combustion chamber of the combustion engine.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a reciprocating engine, in accordance with an aspect of the present disclosure;
FIG. 2 is a schematic cross-sectional view of an embodiment of a cylinder and piston assembly included in the reciprocating engine of FIG. 1 having a knock sensor, in accordance with an aspect of the present disclosure;
FIG. 3 is an embodiment of an engine noise plot of raw data measured by the knock sensor shown in FIG. 2, in accordance with aspects of the present disclosure;
FIG. 4 is an embodiment of an engine noise plot having raw data measured by the knock sensor shown in FIG. 2 and a filtered version of the raw data, in accordance with aspects of the present disclosure;
FIG. 5 is an embodiment of a scalogram or spectrogram plot after applying a wavelet transform to the filtered version of the raw data of FIG. 4, in accordance with aspects of the present disclosure;
FIG. 6 is an embodiment of a scalogram or spectrogram plot after applying a Wigner-Ville distribution function to the filtered version of the raw data of FIG. 4, in accordance with aspects of the present disclosure;
FIG. 7 is an embodiment of an engine noise plat having raw data measured by the knock sensor shown in FIG. 2 and an integrated version of the raw data, in accordance with aspects of the present disclosure;
FIG. 8 is an embodiment of a scalogram or spectrogram plot after applying a wavelet transform to the integrated version of the raw data of FIG. 7, in accordance with an aspect of the present disclosure;
FIG. 9 is an embodiment of a scalogram or spectrogram plot after applying a Wigner-Ville distribution function to the integrated version of the raw data of FIG. 7, in accordance with an aspect of the present disclosure; and
FIG. 10 is an embodiment of a process flow diagram illustrating a method of determining a location of peak firing pressure in a combustion chamber of the reciprocating engine of FIG. 2, in accordance with an aspect of the present disclosure.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to reciprocating engines and, more specifically, to a system and method for processing a signal of a knock sensor diposed in a reciprocating engine via joint time-frequency analysis and/or wavelet analysis. For example, the reciprocating engine (e.g., an internal combustion engine such as a diesel engine), which will be described in detail below with reference to the figures, includes a cylinder and a piston disposed within the cylinder. The reciprocating engine includes an ignition feature that ignites a fuel-oxidant (e.g., fuel-air) mixture within a combustion chamber proximate to the piston (e.g., within the cylinder and above the piston). The hot combustion gases generated from ignition of the fuel-air mixture drive the piston within the cylinder. In particular, the hot combustion gases expand and exert a pressure against the piston that linearly moves the position of the piston from a top portion to a bottom portion of the cylinder during an expansion stroke. The piston converts the pressure exerted by the hot combustion gases (and the piston's linear motion) into a rotating motion (e.g., via a connecting rod coupled to, and extending between, the piston and a crankshaft) that drives one or more loads, e.g., an electrical generator.

Generally, the reciprocating engine also includes a knock sensor configured to detect (e.g., monitor) vibration (e.g., noise, sound, or movement) of components of the reciprocating engine and a crankshaft sensor configured to detect (e.g., monitor) a location or position (e.g., crank angle) of a crankshaft of the reciprocating engine that moves (e.g., rotates) in conjunction with linear movement of the piston within the cylinder. The crank angle monitored by the crankshaft sensor and the vibrations monitored by the knock sensor may be correlated, compared, or otherwise processed to determine operating parameters of the reciprocating engine. For example, in accordance with present embodiments, the vibrations (e.g., vibration profile) and the crank angle may be monitored and/or processed to determine a location (e.g., in crank angles) at which peak firing pressure (e.g., the highest pressure within the combustion chamber during combustion) occurs. It should be noted, however, that the vibration profile may be monitored with respect to time instead of crank angle, as time is correlative of crank angle in an operating reciprocating engine.

Advantageously, the techniques described herein may utilize joint time-frequency analysis, wavelet analysis, chirplet analysis, filtering, integration, or a combination thereof, of the raw knock sensor signal plotted against the raw crankshaft sensor signal (or plotted against time). In other words, the vibration profile plotted over time (or crank angle), in accordance with present embodiments, may be processed via one or more of joint time-frequency analysis, wavelet analysis, chirplet analysis, filtering, or integration to determine a location (measured in crank angles or time) at which peak firing pressure occurs in the combustion chamber.

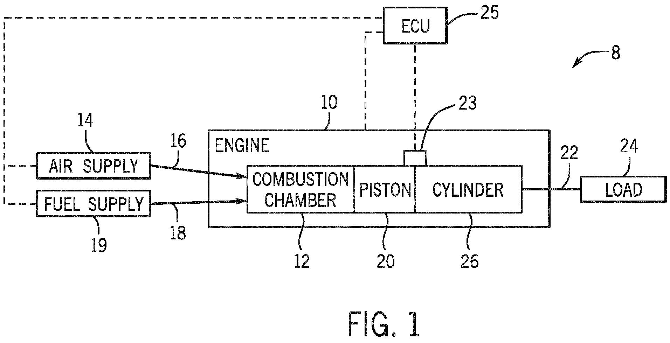

Turning to the drawings, FIG. 1 illustrates a block diagram of an embodiment of a portion of an engine driven power generation system 8. As described in detail below, the system 8 includes an engine 10 (e.g., a reciprocating internal combustion engine) having one or more combustion chambers 12 (e.g., 1, 2, 3, 4, 5, 6, 7, 8, 10, 12, 14, 16, 18, 20, or more combustion chambers 12). An air supply 14 is configured to provide a pressurized oxidant 16, such as air, oxygen, oxygen-enriched air, oxygen-reduced air, or any combination thereof, to each combustion chamber 12. The combustion chamber 12 is also configured to receive a fuel 18 (e.g., a liquid and/or gaseous fuel) from a fuel supply 19, and a fuel-air mixture ignites and combusts within each combustion chamber 12. The hot pressurized combustion gases cause a piston 20 adjacent to each combustion chamber 12 to move linearly within a cylinder 26 and convert pressure exerted by the gases into a rotating motion, which causes a shaft 22 to rotate. Further, the shaft 22 may be coupled to a load 24, which is powered via rotation of the shaft 22. For example, the load 24 may be any suitable device that may generate power via the rotational output of the system 10, such as an electrical generator. Additionally, although the following discussion refers to air as the oxidant 16, any suitable oxidant may be used with the disclosed embodiments. Similarly, the fuel 18 may be any suitable gaseous fuel, such as natural gas, associated petroleum gas, propane, biogas, sewage gas, landfill gas, coal mine gas, for example.

The system 8 disclosed herein may be adapted for use in stationary applications (e.g., in industrial power generating engines) or in mobile applications (e.g., in cars or aircraft). The engine 10 may be a two-stroke engine, three-stroke engine, four-stroke engine, five-stroke engine, or six-stroke engine. The engine 10 may also include any number of combustion chambers 12, pistons 20, and associated cylinders (e.g., 1-24). For example, in certain embodiments, the system 8 may include a large-scale industrial reciprocating engine having 4, 6, 8, 10, 16, 24 or more pistons 20 reciprocating in cylinders. In some such cases, the cylinders and/or the pistons 20 may have a diameter of between approximately 13.5 - 34 centimeters (cm). In some embodiments, the cylinders and/or the pistons 20 may have a diameter of between approximately 10-40 cm, 15-25 cm, or about 15 cm. The system 10 may generate power ranging from 10 kW to 10 MW. In some embodiments, the engine 10 may operate at less than approximately 1800 revolutions per minute (RPM). In some embodiments, the engine 10 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 10 may operate between approximately 750-2000 RPM, 900-1800 RPM, or 1000-1600 RPM. In some embodiments, the engine 10 may operate at approximately 1800 RPM, 1500 RPM, 1200 RPM, 1000 RPM, or 900 RPM. Exemplary engines 10 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

The driven power generation system 8 may include one or more knock sensors 23 suitable for detecting engine "knock." The knock sensor 23 may be any sensor configured to sense vibrations caused by the engine 10, such as vibration due to detonation, pre-ignition, and or pinging. The knock sensor 23 is shown communicatively coupled to an engine control unit (ECU) 25. During operations, signals from the knock sensor 23 are communicated to the ECU 25 to determine if knocking conditions (e.g., pinging) exist. The ECU 25 may then adjust certain engine 10 parameters to ameliorate or eliminate the knocking conditions. For example, the ECU 25 may adjust ignition timing and/or adjust boost pressure to eliminate the knocking. As further described herein, the knock sensor 23 may additionally derive that certain vibrations should be further analyzed and categorized to detect, for example, undesired engine conditions.

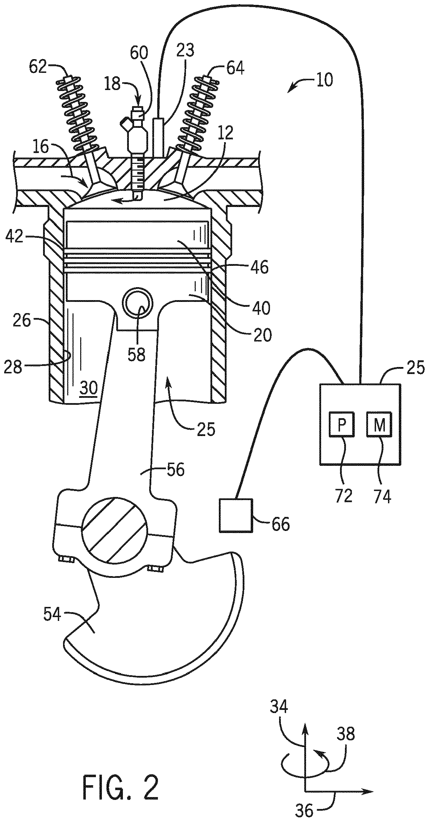

FIG. 2 is a side cross-sectional view of an embodiment of a piston assembly 25 having a piston 20 disposed within a cylinder 26 (e.g., an engine cylinder) of the reciprocating engine 10. The cylinder 26 has an inner annular wall 28 defining a cylindrical cavity 30 (e.g., bore). The piston 20 may be defined by an axial axis or direction 34, a radial axis or direction 36, and a circumferential axis or direction 38. The piston 20 includes a top portion 40 (e.g., a top land). The top portion 40 generally blocks the fuel 18 and the air 16, or a fuel-air mixture 32, from escaping from the combustion chamber 12 during reciprocating motion of the piston 20.

As shown, the piston 20 is attached to a crankshaft 54 via a connecting rod 56 and a pin 58. The crankshaft 54 translates the reciprocating linear motion of the piston 24 into a rotating motion. As the piston 20 moves, the crankshaft 54 rotates to power the load 24 (shown in FIG. 1), as discussed above. As shown, the combustion chamber 12 is positioned adjacent to the top land 40 of the piston 24. A fuel injector 60 provides the fuel 18 to the combustion chamber 12, and an intake valve 62 controls the delivery of air 16 to the combustion chamber 12. An exhaust valve 64 controls discharge of exhaust from the engine 10. However, it should be understood that any suitable elements and/or techniques for providing fuel 18 and air 16 to the combustion chamber 12 and/or for discharging exhaust may be utilized, and in some embodiments, no fuel injection is used. In operation, combustion of the fuel 18 with the air 16 in the combustion chamber 12 cause the piston 20 to move in a reciprocating manner (e.g., back and forth) in the axial direction 34 within the cavity 30 of the cylinder 26.

During operations, when the piston 20 is at the highest point in the cylinder 26 it is in a position called top dead center (TDC). When the piston 20 is at its lowest point in the cylinder 26, it is in a position called bottom dead center (BDC). As the piston 20 moves from top to bottom or from bottom to top, the crankshaft 54 rotates one half of a revolution. Each movement of the piston 20 from top to bottom or from bottom to top is called a stroke, and engine 10 embodiments may include two-stroke engines, three-stroke engines, four-stroke engines, five-stroke engine, six-stroke engines, or more.

During engine 10 operations, a sequence including an intake process, a compression process, a power process, and an exhaust process typically occurs. The intake process enables a combustible mixture, such as fuel and air, to be pulled into the cylinder 26, thus the intake valve 62 is open and the exhaust valve 64 is closed. The compression process compresses the combustible mixture into a smaller space, so both the intake valve 62 and the exhaust valve 64 are closed. The power process ignites the compressed fuel-air mixture, which may include a spark ignition through a spark plug system, and/or a compression ignition through compression heat. The resulting pressure from combustion then forces the piston 20 to BDC. Peak firing pressure describes the highest pressure in the combustion chamber 12 during the power process. A location of peak firing pressure, in accordance with present embodiments, may be monitored by the ECU 25, as described in detail below with reference to later figures. The exhaust process typically returns the piston 20 to TDC while keeping the exhaust valve 64 open. The exhaust process thus expels the spent fuel-air mixture through the exhaust valve 64. It is to be noted that more than one intake valve 62 and exhaust valve 64 may be used per cylinder 26.

The depicted engine 10 also includes a crankshaft sensor 66, the knock sensor 23, and the engine control unit (ECU) 25, which includes a processor 72 and memory 74. The crankshaft sensor 66 senses the position and/or rotational speed of the crankshaft 54. Accordingly, a crank angle or crank timing information may be derived. That is, when monitoring combustion engines, timing is frequently expressed in terms of crankshaft 54 angle (e.g., crank angle). For example, a full cycle of a four stroke engine 10 may be measured as a 720° cycle. The knock sensor 23 may be a Piezoelectric accelerometer, a microelectromechanical system (MEMS) sensor, a Hall effect sensor, a magnetostrictive sensor, and/or any other sensor designed to sense vibration, acceleration, sound, and/or movement. In other embodiments, sensor 23 may not be a knock sensor in the traditional sense, but any sensor that may sense vibration, pressure, acceleration, deflection, or movement, and may not be used to detect engine "knock."

Because of the percussive nature of the engine 10, the knock sensor 23 may be capable of detecting noise even when mounted on the exterior of the cylinder 26 (e.g., cylinder block). However, the knock sensor 23 may be disposed at various locations in or about the cylinder 26. Additionally, in some embodiments, a single knock sensor 23 may be shared, for example, with one or more adjacent cylinders 26. In other embodiments, each cylinder 26 may include one or more knock sensors 23. The crankshaft sensor 66 and the knock sensor 23 are shown in electronic communication with the engine control unit (ECU) 25. The ECU 25 includes a processor 72 and a memory 74. The memory 74 may store computer instructions that may be executed by the processor 72. The ECU 25 monitors and controls and operation of the engine 10, for example, by adjusting combustion timing (e.g., ignition timing), valve 62, 64 timing, adjusting the delivery of fuel and oxidant (e.g., air), and so on.

Advantageously, the techniques described herein may use the ECU 25 to receive data from the crankshaft sensor 66 and the knock sensor 23, and then to create a noise profile (e.g., sound profile, vibration profile, etc.) by plotting the knock sensor 23 data against the crankshaft 54 position. The ECU 25 may then go through the process of analyzing the data to determine when certain operating events and conditions, such as peak firing pressure, occur. For example, the ECU 25 may precondition the noise profile, apply a transform function to the preconditioned noise profile, and locate a characteristic in the transformed version of the preconditioned noise profile (or in the preconditioned noise profile itself) indicative of peak firing pressure.

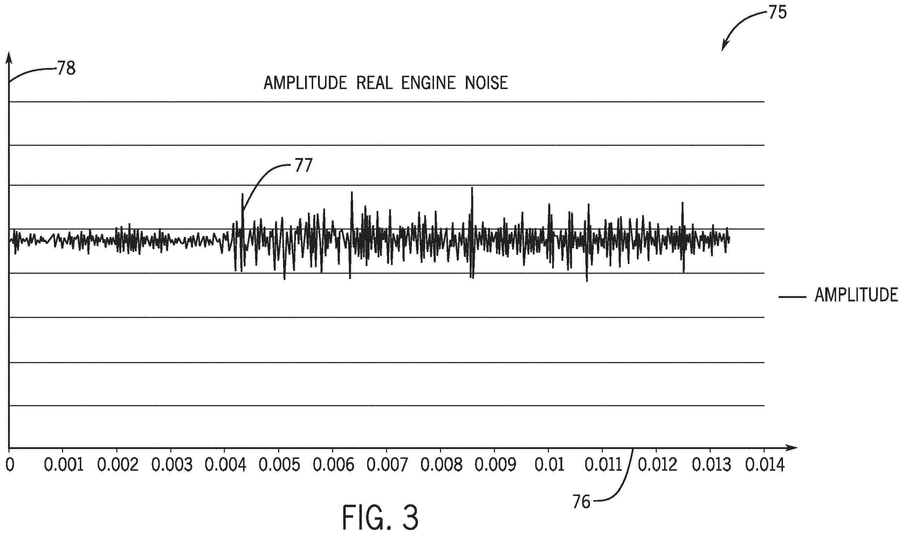

FIG. 3 is an embodiment of a raw engine noise plot 75 derived (e.g., by the ECU 25) of noise data measured by the knock sensor 23, in which x-axis 76 is time but, in some embodiments, may be a position of the crankshaft 54 (e.g., in crank angles) as monitored by the crankshaft sensor 66, whereby time is correlative of position of the crankshaft 54. The plot 75 is generated when the ECU 25 (or other computing device) combines the data received from the knock sensor 23 and the crankshaft sensor 66 during operations of the engine 10. In the depicted embodiment, an amplitude curve 77 (e.g., noise profile) of the knock sensor 23 signal is shown, in which y-axis 78 is amplitude. That is, the amplitude curve 77 includes amplitude measurements of vibration data (e.g., noise, sound data) sensed via the knock sensor 23 and plotted against crank angle. It should be understood that this is merely a plot of a sample data set, and not intended to limit plots generated by the ECU 25. For example, the illustrated sample data set may be generated by the ECU 25 to determine a location of peak firing pressure (e.g., in time or crank angle degrees), as previously described and set forth in detail below.

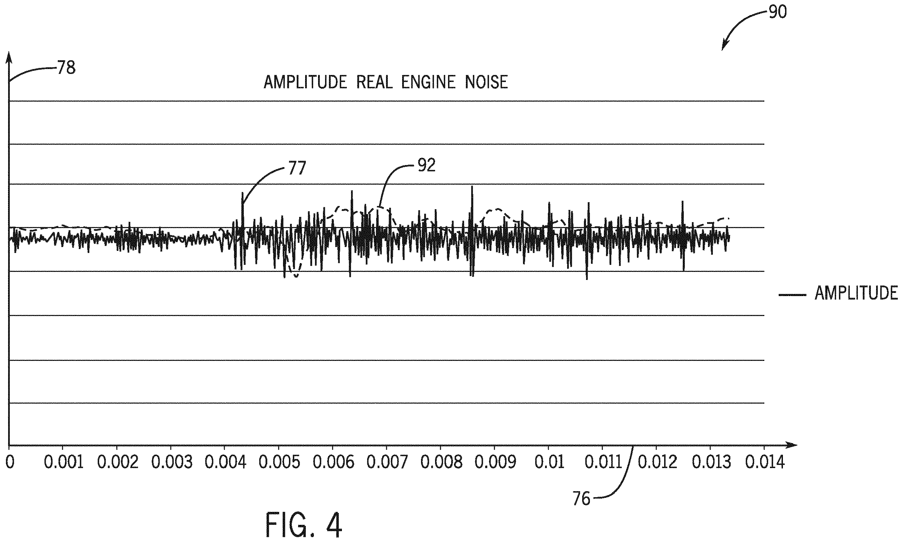

FIG. 4 is an embodiment of a preconditioned noise plot 90 derived (e.g., by the ECU 25) of a filtered version of the raw noise data measured by the knock sensor 23, in which the x-axis 76 is time but, in some embodiments, may be a position of the crankshaft 54 (e.g., in crank angle degrees) as monitored by the crankshaft sensor 66. The preconditioned noise plot 90 includes the raw amplitude curve 77 of FIG. 3, in addition to a filtered curve 92. As previously described, the raw amplitude curve 77 is generated from the raw noise data that is recorded by the knock sensor 23 (e.g., sensed or detected) during engine operations. Accordingly, information relating to peak firing pressure in the combustion chamber 12 may be embedded in the raw amplitude curve 77 and in the filtered curve 92. The filtered curve 92 is derived (e.g., by the ECU 25 or other computing device) by applying a filter to the amplitude curve 77. For example, in the illustrated embodiment, a low-pass filter (e.g., less than 2 kHz) is applied (e.g., by the ECU 25) to the amplitude curve 77 to derive the filtered curve 92. The low-pass filter filters portions of the signal with a frequency lower than a cutoff frequency (e.g., 2 kHz) and attenuates portions of the signal with a frequency higher than the cutoff frequency, thereby attenuating extraneous data.

It should be noted that, in certain embodiments, a different low-pass filter may be used, a band-pass filter may be used, or a high-pass filter may be used. The type of filter applied to the amplitude curve 77 may depend on the particular engine system 10 in which the knock sensor 23 is installed. Further, the type of filter applied to the amplitude curve 77 may depend on the operating event or condition being monitored. For example, in the illustrated embodiment, the amplitude curve 77 and the filtered curve 92 include one or more portions indicative of at least one operating condition, such as peak firing pressure. It should be noted that the amplitude curve 77, in some embodiments, may not be plotted together with the filtered curve 92 after the filtered curve 92 is derived from the amplitude curve 77. Further, in certain embodiments, the preconditioned noise plot 90 may include other curves in addition to, or in alternate of, the amplitude and filtered curves 77, 92, such as an integrated or integral curve. The integrated curve and other features will be described in detail below with reference to later figures.

As previously described, the raw engine noise plot 75 and the preconditioned noise plot 90 include axes 76, 78 representing time (or crank angle) and amplitude, respectively. Thus, the plots 75, 90 show the signal(s) in the time domain. Unfortunately, frequency content may not be easily deduced from many non-stationary signals represented in the time domain. Further, although the signal's frequency content may be derived by applying a Fourier transform and plotting a frequency-amplitude representation of the signal, time content may be not easily deduced from many non-stationary signals represented in the frequency domain. In other words, analysis of time content and frequency content, as applied in accordance with the present disclosure, may be bound by Heisenberg's uncertainty principle, which limits the precision by which time and frequency can be observed simultaneously. Thus, in accordance with present embodiments, a time-frequency transform function may be applied to the filtered curve 92 (or otherwise preconditioned curve). In other words, after deriving the filtered curve 92, a time-frequency transform function (e.g., a wavelet transform or a distribution transform function) may be applied to the filtered curve 92 to derive information not readily available in the time-amplitude and/or frequency-amplitude representations of the signal. Thus, the ECU 25 may analyze the transformed signal in both a time and a frequency domain simultaneously, as set forth below.

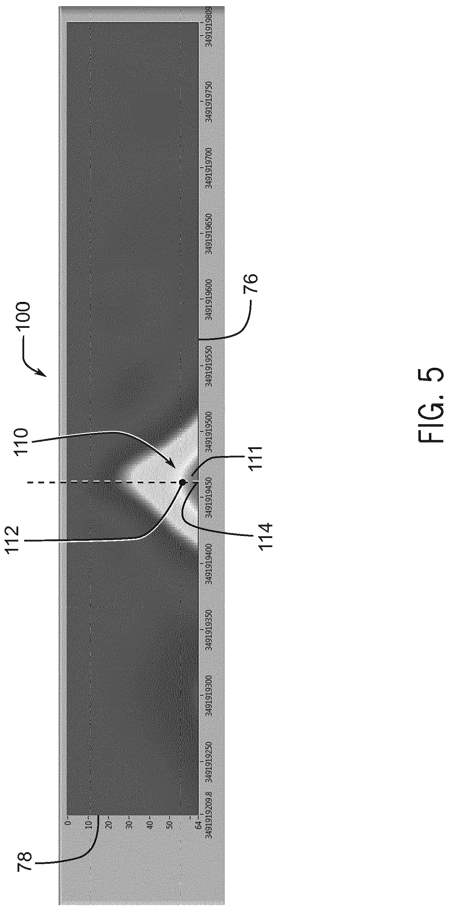

For example, FIG. 5 is an embodiment of a scalogram plot 100 (e.g., spectrogram plot) derived by applying a wavelet transform to the filtered curve 92 of FIG. 4 (although, in other embodiments, as set forth below, the wavelet transform may be applied to the raw amplitude curve 77, to an integral of the raw amplitude curve 77, or to an integral of the filtered curve 92). It should be noted that the scalogram plot 100 is only one non-limiting example of a plot that represents a three-dimensional space, but that any other suitable three-dimensional representation, such as a waterfall plot, or any other suitable graphical, tabular, or numerical matrix representation may be used in accordance with present embodiments. The illustrated scalogram plot 100 includes the x-axis 76 representing time, the y-axis 78 representing frequency (or, in certain embodiments, "scale" or the inverse of frequency), and a z-axis (e.g., a color component, as shown in the illustrated embodiment) representing coefficients of the wavelet, as described in detail below. Further, it should be noted that other types of transform functions (e.g., Wigner-Ville distribution function) may be applied to the filtered curve 92, in accordance with present embodiments, and will be described in detail with reference to later figures.

In the illustrated embodiment, the wavelet transform is applied to the filtered curve 92 by the ECU 25 after the ECU 25 determines or derives a mother wavelet that substantially "fits" the filtered curve 92. For example, the ECU 25 may select the mother wavelet from a wavelet bank of mother wavelets stored, e.g., in the memory 74 of the ECU 25, or may derive a variant based on stored mother wavelets. The wavelet bank may include any number of mother wavelets, such as a Ricker wavelet (e.g., Mexican hat wavelet), a Meyer wavelet, a Morlet wavelet, or some other mother wavelet. The ECU 25 may analyze each of the mother wavelets until a suitable mother wavelet is determined for the filtered curve 92, or until all of the mother wavelets have been analyzed and one of the mother wavelets is determined to be the best fit. The ECU 25 may additionally modify an existing mother wavelet to better fit the data.

After selecting or modifying the mother wavelet, the ECU 25 applies the mother wavelet to segments (e.g., windows) of the filtered curve 92 to determine wavelet coefficients for each segment, e.g., where the wavelet coefficients dilate, shrink, or otherwise size the mother wavelet to the particular segment of the filtered curve 92 being processed. Physically, the wavelet coefficients may represent amplitude of a particular frequency at a particular time, or energy density. In some embodiments, the coefficients represent ratings of how well the mother wavelet fits each particular segment of the filtered curve 92. In general, the wavelet coefficients are stored in the memory 74 of the ECU 25 and, as previously described, are applied as the z-axis (or the color component, in the illustrated embodiment) of the scalogram plot 100.

After generating the scalogram plot 100 (or some other plot suitable for representing the wavelet-transformed signal), the ECU 25 determines a "hottest" portion 110 (e.g., epicenter, focal point, focus, etc.) of the transformed signal on the scalogram plot 100 in terms of the color component (e.g., the z-axis), and determines a time coordinate 114 (e.g., on the x-axis 76) of the hottest portion 110. For example, the hottest portion 110 may be a red portion 111. The ECU 25 confirms the time coordinate 114 (e.g., on the x-axis 76) of the hottest portion 110 on the scalogram plot 100 as the location of peak firing pressure. In other words, the ECU 25 confirms the time coordinate 114 as the time at which peak firing pressure occurred in the combustion chamber 12. In some embodiments, the hottest portion 110 of the transformed signal on the scalogram plot 100 may include a region on the scalogram plot 100. Thus, the ECU 25 determines a central point 112 located in the hottest portion 110, and determines the x-axis 76 coordinate 114 of the central point 112. Further, in some embodiments, the x-axis 76 may include a position of the crankshaft 54 (e.g., in crank angles), such that the ECU 25 determines a crank angle coordinate 114 (e.g., on the x-axis 76) instead of a time coordinate 114 and confirms the crank angle coordinate 114 as the location of peak firing pressure in the combustion chamber 12.

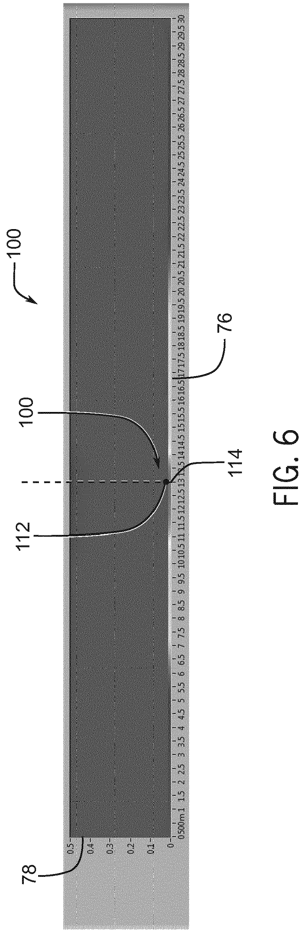

As previously described, other time-frequency transform functions may be used in place of, or in addition to, wavelet transforms. For example, an embodiment of the scalogram plot 100 (e.g., spectrogram plot) after applying a Wigner-Ville distribution function to the filtered curve 92 of FIG. 4 is shown in FIG. 6. It should be noted that the scalogram plot 100 is only one non-limiting example of a plot that represents a three-dimensional space, but that any other suitable three-dimensional representation, such as a waterfall plot, may be used in accordance with present embodiments. The illustrated scalogram plot 100 includes the x-axis 76 representing time (or crank angle), the y-axis 78 representing frequency (or, in certain embodiments, "scale" or the inverse of frequency), and a z-axis (e.g., color component) representing amplitude, intensity, or energy distribution.

The Wigner-Ville distribution function is a bi-linear time-frequency distribution function used to transform and derive information from a signal which includes a changing frequency over time. It should be noted that, in accordance with present embodiments, other suitable distribution functions, such as a Gabor transform, a Choi-Williams distribution function, a Cone-shaped distribution function, or a Cohen distribution may be used in place of, or in addition to, the Wigner-Ville distribution function. In accordance with present embodiments, the ECU 25 applies the Wigner-Ville distribution function to the filtered curve 92 to generate a time-frequency representation of the filtered curve 92. After generating the scalogram plot 100 (or some other plot suitable for representing the transformed signal), the ECU 25 determines the "hottest" portion 110 (e.g., epicenter, focal point, focus, etc.) on the scalogram plot 100 in terms of the color component (e.g., the z-axis), and determines the time coordinate 114 (e.g., on the x-axis 76) of the hottest portion 110. The ECU 25 confirms the time coordinate 114 (e.g., on the x-axis 76) of the hottest portion 110 on the scalogram plot 100 as the location of peak firing pressure. In other words, the ECU 25 confirms the time coordinate 114 as the time at which peak firing pressure occurred in the combustion chamber 12. As previously described, in some embodiments, the x-axis 76 may include a position of the crankshaft 54 (e.g., in crank angles), such that the ECU 25 determines a crank angle coordinate 114 (e.g., on the x-axis 76) instead of a time coordinate 114 and confirms the crank angle coordinate 114 as the location of peak firing pressure in the combustion chamber 12. Further, as previously described, the hottest portion 110 may include a region on the scalogram plot 100, and the ECU 25 may determine the center point 112 in the hottest portion 110 and assign the time or crank angle coordinate 114 of the center point 112 as the location of peak firing pressure.

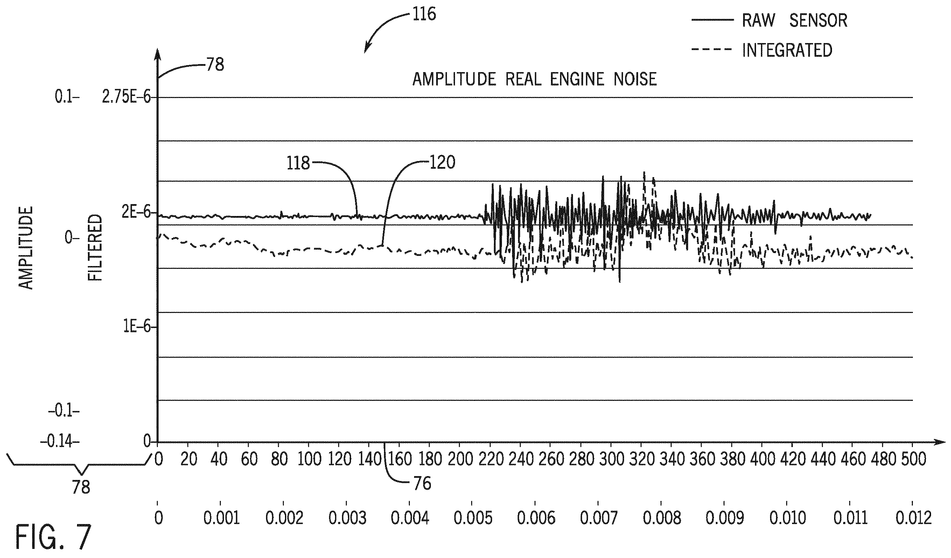

In some embodiments, the amplitude curve 77 (e.g., as shown in FIG. 3) may be preconditioned in addition to, or in alternate of, the filter(s) described with reference to FIGS. 4-6. For example, FIG. 7 shows an embodiment of a preconditioned noise plot 116 (e.g., similar to preconditioned noise plot 90 in FIG. 4) derived (e.g., by the ECU 25) of an integrated version of raw noise data measured by the knock sensor 23, in which the x-axis 76 is time but, in some embodiments, may be a position of the crankshaft 54 (e.g., in crank angles) as monitored by the crankshaft sensor 66. The preconditioned noise plot 116 includes a raw amplitude curve 118 (e.g., similar to raw amplitude curve 77 in FIG. 4) in addition to an integrated curve 120. The ECU 25 may generate the integrated curve 120 by integrating the raw amplitude curve 118 over time or over crankshaft 54 position. As previously described, preconditioning of the raw amplitude curve 118 may include filtering, integration, or both.

It should be noted that, in some embodiments, the location of peak firing pressure may be determined directly from the integrated curve 120, without transforming the integrated curve 120. For example, peak firing pressure is generally located at the steepest segment of the integrated curve 120, such as a segment having a highest slope. The ECU 25 may determine which segment of the integrated curve 120 is the steepest (e.g., via slope analysis), determine a time coordinate or crankshaft 54 position coordinate (e.g., on the x-axis 76) of the steepest segment, and confirm the location of peak firing pressure at the time or crankshaft 54 position coordinate on the x-axis 76. If the segment is represented over a range of x-axis 76 coordinates, the ECU 25 may select a focal point (e.g., center point) on the steepest segment, and assign said focal point as the location of peak firing pressure.

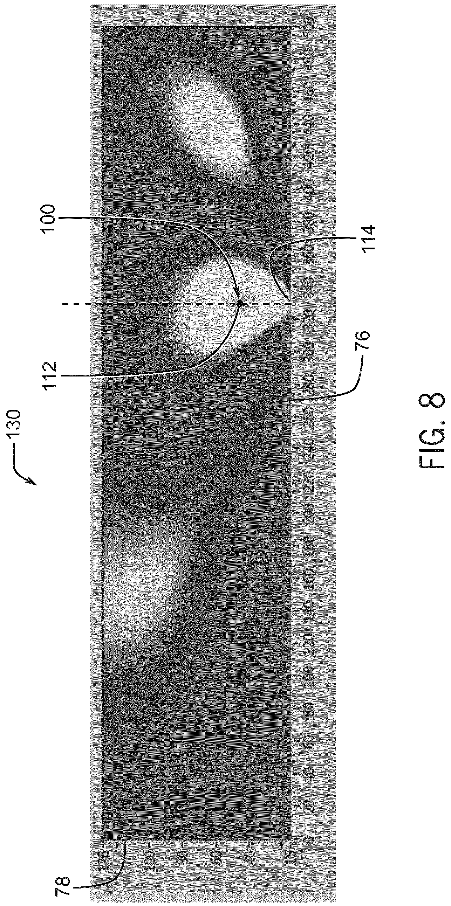

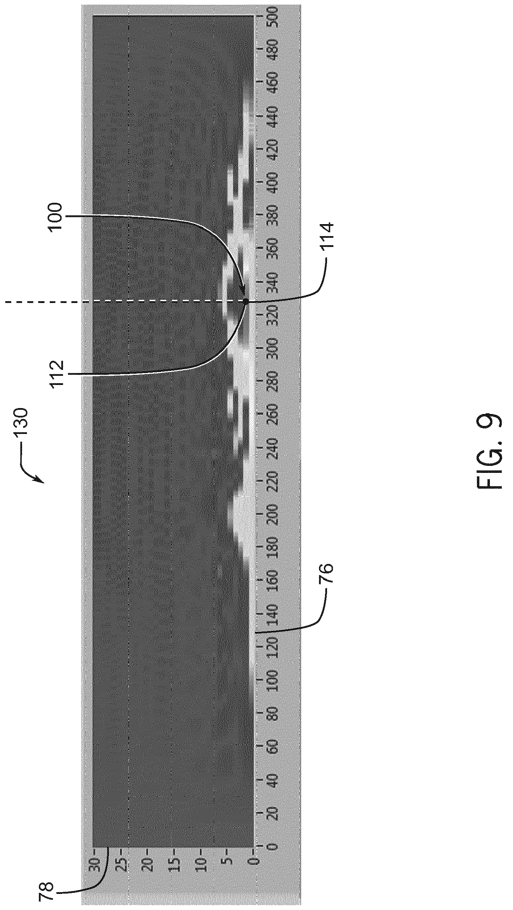

However, in some embodiments, it may be more accurate to transform the integrated curve 120 and determine the location of peak firing pressure by analyzing a time-frequency representation of the transformed signal. For example, a wavelet transform function or some other time-frequency transform function (e.g., a distribution function such as Wigner-Ville distribution function) may be applied to the integrated curve 120 to generate the time-frequency representation. FIG. 8 is an embodiment of a spectrogram or scalogram plot 130 (e.g., similar to scalogram plot 100 of FIGS. 5 and 6) after applying a wavelet transform to the integrated curve 120 of FIG. 7, and FIG. 9 is an embodiment of the scalogram plot 130 (e.g., spectrogram plot) after applying a Wigner-Ville distribution function to the integrated curve 120 of FIG. 7. In both embodiments, as described with reference to FIGS. 5 and 6, the ECU 25 may determine the hottest portion (e.g., epicenter, focus, focal point, etc.) 110 in terms of the color component in the scalogram plot 130 of FIG. 8, the scalogram plot 130 of FIG. 9, or both, and confirm the location of peak firing pressure as being the x-axis 76 coordinate 114 (e.g., time or crankshaft 54 position) of the hottest portion 110 (or central point 112 within the hottest portion 110) on the scalogram plot(s) 130.

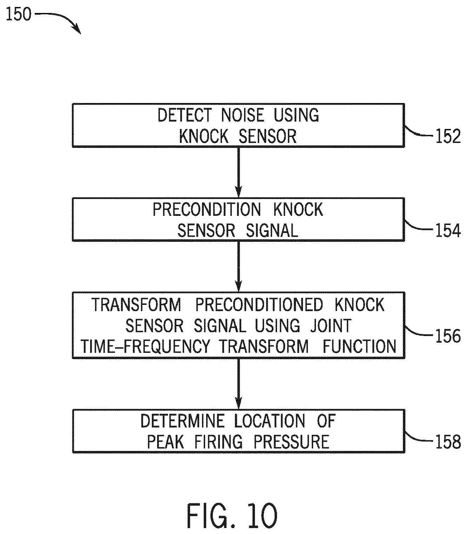

FIG. 10 is an embodiment of a process flow diagram illustrating a method 150 of determining a location of peak firing pressure in the combustion chamber 12 of the reciprocating engine 10 of FIG. 2. In the illustrated embodiment, the method 150 includes detecting noise, via the knock sensor 23, emitted by the reciprocating engine 10 via the knock sensor 23 (block 152). As previously described, the knock sensor 23 may be any suitable sensor for detecting noise, vibration, acceleration, pressure, or deflection. Further, time or crankshaft 54 position may be recorded by the crankshaft sensor 66 (or some other suitable sensor), such that the noise may be plotted against time or crankshaft 54 position (e.g., crank angle).

The method 150 further includes preconditioning the knock sensor signal (e.g., amplitude curve 77 in FIG. 3) (block 154). Preconditioning the amplitude curve 77, 118 may include filtering the amplitude curve 77, 118 (as described with reference to FIG. 4), integrating the amplitude curve 77, 118 (as described with reference to FIG. 7), or both. In some embodiments, the ECU 25 may plot the amplitude curve 77, 118 and the preconditioned curve(s) (e.g., the filtered curve 92 and/or the integrated curve 120) on a display for viewing. In some embodiments, the location of peak firing pressure may be determined directly from the integrated curve 120, as previously described, by locating the steepest point, segment, or portion of the integrated curve 120 and determining the time or crankshaft 54 position coordinate of the steepest point, segment, or portion.

In accordance with present embodiments, the method 150 also includes transforming the preconditioned signal using joint time-frequency transform function(s) (block 156). For example, a wavelet transform function may be applied to the preconditioned signal, or a distribution function (e.g., Wigner-Ville distribution function) may be applied to the preconditioned signal. As described above, the transformed signal may be plotted by the ECU 25, for example, on a display for viewing.

The method 150 further includes determining a location of peak firing pressure 158 (block 158). For example, as previously described, the ECU 25 analyzes the transformed signal (e.g., on the scalogram plot 100, 130) to determine the hottest portion 110 of the transformed signal. In some embodiments, the hottest portion 110 may be a region of the transformed signal on the scalogram plot 100, 130. Accordingly, the ECU 25 may determine the center point 112 in the hottest portion 110. The ECU 25 may then determine the x-axis 76 coordinate 114 (e.g., time coordinate 114 or crank angle coordinate 114) of the hottest portion 110 or center point 112 in the hottest portion 110, and assign the x-axis 76 coordinate 114 as the location of peak firing pressure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method, comprising:
   receiving a noise signal sensed by a knock sensor disposed in or proximate to a combustion chamber of a combustion engine;
   preconditioning the noise signal to generate a preconditioned noise signal; and
   processing the preconditioned noise signal to determine a location, a time, or a combination thereof of a peak firing pressure in the combustion chamber of the combustion engine.
2. The method of clause 1, comprising applying a transform function to the preconditioned noise signal to generate a transformed signal, wherein determining the location, the time, or the combination thereof, of the peak firing pressure comprises analyzing the transformed signal.
3. The method of any preceding clause, wherein analyzing the transformed signal comprises generating and analyzing a scalogram plot to determine an epicenter of the transformed signal, wherein a location coordinate of the epicenter is correlative with the location, the time, or the combination thereof, of the peak firing pressure.
4. The method of any preceding clause, wherein the location coordinate is a unit of time, a unit of crankshaft position, or a combination thereof.
5. The method of any preceding clause, wherein applying the transform function to the preconditioned noise signal to generate the transformed signal comprises applying a wavelet transform function to derive a three-dimensional representation.
6. The method of any preceding clause, wherein applying the wavelet transform function comprises applying a Mexican hat wavelet function, a Meyer wavelet function, or a Morelet wavelet function.
7. The method of any preceding clause, wherein applying the transform function to the preconditioned noise signal to generate the transformed signal comprises applying a joint time-frequency transform function and wherein analyzing the transformed signal comprises analyzing the transformed signal in both a time and a frequency domain simultaneously.
8. The method of any preceding clause, wherein applying the joint time-frequency transform function comprises applying a Wigner-ville distribution function, a Gabor transform function, a Choi-Wiliams distribution function, a Cone-shaped distribution function, or a Cohen distribution function.
9. The method of any preceding clause, wherein preconditioning the noise signal to generate the preconditioned noise signal comprises filtering the signal with a low-pass, band-pass, or high-pass filter, integrating the noise signal, or both.
10. A system, comprising:
   an engine control system configured to monitor peak firing pressure of a combustion chamber of a combustion engine, wherein the engine control system comprises a processor configured to:
      receive a noise signal sensed by a knock sensor disposed in or proximate to a combustion chamber of the combustion engine;
      precondition the noise signal to generate a preconditioned noise signal; and
      process the preconditioned noise signal to determine a location, a time,
   or a combination thereof of the peak firing pressure.
11. The system of any preceding clause, comprising a crankshaft sensor configured to sense the position of the crankshaft, wherein the processor is further configured to:
   receive, from the crankshaft sensor, a crank angle signal indicative of the position of the crankshaft; and
   correlate the preconditioned noise signal with the crank angle signal to determine the location of the peak firing pressure, wherein the location of the peak firing pressure comprises the position of the crankshaft.
12. The system of any preceding clause, wherein the processor is further configured to apply a transform function to the preconditioned noise signal to generate a transformed signal, wherein determining the location, time, or the combination thereof of the peak firing pressure comprises analyzing the transformed signal.
13. The system of any preceding clause, wherein applying the transform function to the preconditioned noise signal to generate the transformed signal comprises applying a wavelet transform function.
14. The system of any preceding clause, wherein applying the wavelet transform function comprises applying a Mexican hat wavelet function, a Meyer wavelet function, or a Morelet wavelet function.
15. The system of any preceding clause, wherein applying the transform function to the preconditioned noise signal to generate the transformed signal comprises applying a joint time-frequency transform function and wherein analyzing the transformed signal comprises analyzing the transformed signal in both a time and a frequency domain.
16. The system of any preceding clause, wherein applying the joint time-frequency transform function comprises applying a Wigner-ville distribution function, a Gabor transform function, a Choi-Wiliams distribution function, a Cone-shaped distribution function, or a Cohen distribution function.
17. The system of any preceding clause, wherein the processor is further configured to determine an epicenter of the transformed signal, wherein the location, the time, or the combination thereof of the peak firing pressure corresponds to a location and/or a time coordinate of the epicenter of the transformed signal.
18. The system of any preceding clause, wherein preconditioning the noise signal to generate the preconditioned noise signal comprises filtering the signal with a low-pass, band-pass, or high-pass filter, integrating the noise signal, or both.
19. The system of any preceding clause, wherein the processor is configured to determine the location, the time, or the combination thereof of the peak firing pressure by directly analyzing the preconditioned noise signal without utilizing a wavelet transform function or a joint time-frequency transform function.
20. A non-transitory computer readable medium comprising executable instructions that, when executed, cause a processor to:
   receive a noise signal sensed by a knock sensor disposed in or proximate to a combustion chamber of a combustion engine;
   precondition the noise signal to generate a preconditioned noise signal;
   apply a transform function to the preconditioned noise signal to generate a transformed signal; and
   analyze the transformed signal to determine a location, a time, or a combination thereof of a peak firing pressure in the combustion chamber of the combustion engine.

## Claims

1. A method (150), comprising:
receiving (152) a noise signal sensed by a knock sensor (23) disposed in or proximate to a combustion chamber (12) of a combustion engine (10);
preconditioning (154) the noise signal to generate a preconditioned noise signal; and
processing (156) the preconditioned noise signal to determine a location (158), a time, or a combination thereof of a peak firing pressure in the combustion chamber of the combustion engine.

2. The method (150) of claim 1, comprising applying a transform function to the preconditioned noise signal to generate a transformed signal, wherein determining the location, the time, or the combination thereof, of the peak firing pressure comprises analyzing the transformed signal.

3. The method (150) of claim 2, wherein analyzing the transformed signal comprises generating and analyzing a scalogram plot to determine an epicenter of the transformed signal, wherein a location coordinate of the epicenter is correlative with the location, the time, or the combination thereof, of the peak firing pressure.

4. The method (150) of claim 3, wherein the location coordinate is a unit of time, a unit of crankshaft position, or a combination thereof.

5. The method (150) of any of claims 2 to 4, wherein applying the transform function to the preconditioned noise signal to generate the transformed signal comprises applying a wavelet transform function to derive a three-dimensional representation.

6. The method (150) of claim 5, wherein applying the wavelet transform function comprises applying a Mexican hat wavelet function, a Meyer wavelet function, or a Morelet wavelet function.

7. The method (150) of any of claims 2 to 6, wherein applying the transform function to the preconditioned noise signal to generate the transformed signal comprises applying a joint time-frequency transform function and wherein analyzing the transformed signal comprises analyzing the transformed signal in both a time and a frequency domain simultaneously.

8. The method (150) of claim 7, wherein applying the joint time-frequency transform function comprises applying a Wigner-ville distribution function, a Gabor transform function, a Choi-Wiliams distribution function, a Cone-shaped distribution function, or a Cohen distribution function.

9. The method (150) of any preceding claim, wherein preconditioning the noise signal to generate the preconditioned noise signal comprises filtering the signal with a low-pass, band-pass, or high-pass filter, integrating the noise signal, or both.

10. A system (8), comprising:
an engine control system configured to monitor peak firing pressure of a combustion chamber (12) of a combustion engine (10), wherein the engine control system comprises a processor (72) configured to:
receive (152) a noise signal sensed by a knock sensor (23) disposed in or proximate to a combustion chamber (12) of the combustion engine;
precondition (154) the noise signal to generate a preconditioned noise signal; and
process (156) the preconditioned noise signal to determine a location (158), a time, or a combination thereof of the peak firing pressure.

11. The system (8) of claim 10, comprising a crankshaft sensor (66) configured to sense the position of the crankshaft (54), wherein the processor (72) is further configured to:
receive, from the crankshaft sensor (66), a crank angle signal indicative of the position of the crankshaft (54); and
correlate the preconditioned noise signal with the crank angle signal to determine the location of the peak firing pressure, wherein the location of the peak firing pressure comprises the position of the crankshaft.

12. The system (8) of claim 10 or 11, wherein the processor (72) is further configured to apply a transform function to the preconditioned noise signal to generate a transformed signal, wherein determining the location, time, or the combination thereof of the peak firing pressure comprises analyzing the transformed signal.

13. The system (8) of claim 12, wherein applying the transform function to the preconditioned noise signal to generate the transformed signal comprises applying a wavelet transform function.

14. The system (8) of claim 13, wherein applying the wavelet transform function comprises applying a Mexican hat wavelet function, a Meyer wavelet function, or a Morelet wavelet function.

15. The system (8) of any of claims 12 to 14, wherein applying the transform function to the preconditioned noise signal to generate the transformed signal comprises applying a joint time-frequency transform function and wherein analyzing the transformed signal comprises analyzing the transformed signal in both a time and a frequency domain.
